# EUROPEAN PATENT APPLICATION

(11) **EP 3 456 900 A1**
(43) Date of publication of application: **20.03.2019**
(21) Application number: 17191356.9
(22) Date of filing: 15.09.2017
(51) Int. Cl.: E04F 15/08, E04F 15/10, E04F 15/02, B44C 5/04, B32B 13/02

(54) **A FLOOR ELEMENT FOR A FLOOR COVERING, A FLOOR COVERING AND A METHOD FOR MANUFACURING A FLOOR ELEMENT**

(71) Applicant: Unilin, BVBA, 8710 Wielsbeke (BE)
(72) Inventor: MEERSSEMAN, Laurent, B-8500 Kortrijk (BE); CLEMENT, Benjamin, B-8790 Waregem (BE)
(74) Representative: Schacht, Benny Marcel Corneel

(57) **Abstract**

Floor element (1) comprising a fiber containing mineral board (3) and a top decorative layer (7), wherein the top decorative layer (7) comprises a printed decor (8) and a thermally cured substance.

## Description

The present invention relates to a floor element for forming a floor covering and a floor covering. The invention also relates to a method for manufacturing a floor covering.

More particularly, the invention relates to a floor covering comprising fiber containing mineral board. WO 2006/108446 discloses floor elements comprising a core made of a fiber containing mineral board, a top layer and edges provided with coupling means. Fiber containing mineral boards provide the floor elements with peculiar features of like for example high dimension stability, high fire resistance, noise barrier and waterproofness.

With fiber containing mineral board is intended a board containing at least a mineral and a fibrous material, bonded together, for example pressed together to form the board. The mineral can comprise silica, calcium carbonate or cement. The fibers can be for example polymeric fibers or natural fibers. The adhesion is preferably carried out under pressure either in a cold or warm condition. More in detail the manufacturing of the mineral board is preferably carried out using the method disclosed in US 4,428,775.

Such floor elements comprise a top decorative layer provided with a decor, for example imitating a natural wood or stone. Said decor is provided by means of a printed paper laminated to the top surface of the mineral board. The paper can be printed by means of organic inks according to several techniques like, offset printing, screen printing or inkjet digital printing. WO 2016/156506 discloses a method where the surface of a cement fiberboard is decorated using inkjet printing with water-based inks, and wherein a UV-cured protective layer is applied over the print.

The present invention aims in the first place to provide an alternative floor element, which, in accordance with several of its preferred embodiments, is directed to solve one or more of the problems arising in the state of the art.

Thereto, the present invention, according to its first independent aspect, relates to a floor element comprising a fiber containing mineral board and a top decorative layer, wherein the top decorative layer comprises a printed decor and a thermally cured substance. The inventors have found that thanks to this solution the decorative layer can be adequately protected from weather interference or from any other external element that can deteriorate the decor.

With the expression "thermal or thermally cured" is meant that the decorative layer is hardened after having been exposed to a heat transfer process, namely a heating or a cooling, preferably a forced heating or cooling. Thus, some non-exhaustive examples of thermal curing comprise: drying, precipitation, solidification, melting and cooling, crystallization, vitrification, sintering, polymerization, vulcanization, reticulation and/or other thermal activated chemical reactions.

It is also clear that the expressions "thermally curable substances" and "thermally cured substance" define substantially the same substance respectively before and after a thermal curing process.

According to the preferred embodiment of the invention the fiber containing mineral board comprises at least a mineral. The mineral is preferably a cement, for example a Portland cement. Preferably the cement content is comprised between 25 and 85 % by volume, preferably between 35 and 50 % by volume. The board may also comprise mineral fillers like quartz or calcium carbonate.

The mineral board also comprises fibers. Normally, the fibers can be glass fibers, polymeric fibers like polyethylene fibers and/or polyvinyl fibers and/or natural fibers, for example cellulose or jute fibers. Fibers can be either reinforcing fibers or process fibers. The reinforcing fibers are adapted to improve mechanical and/or physical properties of the board and they are comprised in a content between 1 and 40 % by volume, preferably between 2 and 20 % by volume. Process fibers, are fibers acting during the manufacturing process for promoting the bonding of the mineral. The reinforcing fibers is comprised between 1 and 40 % by volume, preferably between 2 and 20 % by volume.

According to a preferred embodiment of the invention the board comprises fibers adapted to withstand the top decorative layer curing temperature, i.e. fibers having a melting or softening temperature higher than the curing temperature. More preferably the board is free from ignitable or meltable or otherwise heat degradable fibers, like polymeric or paper fibers, especially when the curing temperature is above 200°C preferably above 300°C. Therefore, the board preferably comprises glass fibers, carbon fibers, metal fibers like for example steel fibers and/or ceramic fibers like for example boron fibers. Preferably the fibrous content of the board is at least for 80 weight% made up of such non-heat-degradable fibers, or is exclusively made up of such fibers. According to a preferred embodiment of the invention the mineral board comprises glass fibers having a softening point above 800°C, more preferably above 900°C so that these fibers can withstand high curing temperature without compromising the stability or integrity of the board.

According to an alternative embodiment the floor element comprises a board based on mineral fibers, for example mineral wool, and a binding agent for example urea formaldehyde glue, melamine glue or the like as disclosed in EP 2202056 and DE 102015115603.

The mineral board comprises a thickness between 2 and 30 mm, preferably between 2 and 20 mm, more preferably between 3 and 15 mm.

The floor element can be made of any shape, for example a squared, rectangular or hexagonal shape. In the preferred embodiment, the floor element is rectangular and oblong in shape.

The printed decor may be applied with any printing technique, such as with rollers, serigraphy or with a digital printer, such as with an inkjet printer. The printed decor can be provided with a variety of textures, designs and colors. In a preferred embodiment, the decor simulates a natural product, such as natural stone or wood. According to a preferred embodiment of the invention the printed decor represents a wood pattern with the grain lines running substantially in the longitudinal direction of the floor element.

The printed decor may be formed by organic inks although a preferred embodiment provides for a decor formed by inorganic, preferably ceramic, pigments.

Organic inks allow to obtain a wide gamut of colors thereby providing realistic and aesthetically pleasant decor. On the other hand, the organic inks are subjected to degradation and/or deterioration when exposed to water, light, and frequent changes of temperature. These conditions occur in case of outdoor application when the floor element is exposed to atmospheric agents.

Inorganic, preferably ceramic pigments, may comprise metal oxides in form of an extremely fine powder, preferably adapted to be ejected by the nozzles of an inkjet printing head. For example, the ceramic pigments are in form of a powder having an average dimension below 0,8 µm, preferably below 0,7 µm, and a maximum dimension below 1,5 µm, preferably below 1 µm. The ceramic pigments are dispersed in a solvent or a liquid vehicle to form a ceramic ink. The solvent can be for example ethylene glycol, propylene glycol.

It is clear that the ink can comprise additives like flocculants or other additives to improve properties of the ink itself like rheology or the contact angle with the surface to be printed.

According to the invention, the top decorative layer comprises a thermally curable substance adapted to harden when heated up to a curing temperature (so to become a thermally cured substance) to thereby cover or englobe the pigment contained in the printed decor, so that the printed decor is protected by the thermally cured substance. The thermally curable substance can be an organic substance or an inorganic substance, although an inorganic thermally curable substance is preferred.

In case the thermally cured substance is an organic substance, it is preferably a thermosetting resin like for example a melamine resin, epoxy resin, polyurethane or acrylic resin. In this case the thermally curable substance can be heated at a temperature below 250°C, preferably below 150°C, for example 100°C.

According to the most preferred embodiment, the thermally cured substance is an inorganic substance, it is a glaze, i.e. a glassy and substantially impermeable coating. The glaze has preferably a softening point below 850°C, more preferably below 650°C, for example 600°C. The glaze comprises at least a frit that is a glass having a composition comprising one or more oxides the following elements: Si, B, P, Al, Mg, Li, Na, Ca, Sr, Pb, Fe. The glaze preferably has a hardness above 6 of the Mohs Scale, for example 7 of the Mohs scale so to provide scratch and wear resistance to the top decorative layer of the floor element. Further, the glaze has preferably a thermal expansion coefficient below 1x10⁻⁵ C⁻¹. A practical example of a glaze that may be used in the context of the present invention is a fluorinated tin-based glass frit, such as a SnO-SnF2-P2O5-based glass frit, e.g. the frit disclosed in WO 2017/119131. Such frit has an extremely low softening point, for example as low as 200°C.

The floor element provided in accordance with the above preferred embodiment leads to a floor product having a wear resistance, waterproofness and dimensional stability, equivalent to that of ceramic tiles or planks. Such floor element however possesses a better impact resistance, due to the fibers contained in the core material, and allows for a less cumbersome and easier installation and de-installation, since its edges can be made with profiled edge contours having coupling elements, comparable to those of laminate flooring disclosed in WO 97/47834. The production of floor elements in accordance with this preferred embodiment requires significantly lower energy in comparison to the production of ceramic tiles and enables to obtain longitudinal flooring elements with only a minimal or without any warping along their length, such that they may be laid side to side with any desirable offset between the short ends of adjacent plank-shaped floor elements. Due to the hard to control warpage of ceramic planks, the latter is problematic in ceramic floor planks which e.g. imitate parquet products.

The thermally curable substance can be provided on the floor element according to different possibilities, a non-exhaustive list of which are listed here below.

According to a first possibility, the thermally cure substance may be provided in order to coat uniformly at least partially or entirely the top surface of the floor element by means of any suitable coating technique, for example using spraying techniques, one or more rollers or slipping. According, to this first possibility the thermally curable substance is provided in a separate step with respect to the printed decor and it can be applied either above or beneath, or both above and beneath, the printed decor itself.

For example, the thermally cured substance can be placed above the printed decor thereby forming a protective coating for the floor element. In this case the thermally cured substance is preferably translucent or transparent.

Alternatively, the thermally cured substance can be placed beneath the printed decor thereby forming a background coating. In this case, during the thermal curing step the printed decor will be embedded into the thermally cured substance so to be protected by the thermally cured substance itself. For example, the thermally cured substance is a glaze and the printed decor comprises ceramic pigments so that after the thermal curing step the ceramic pigments are embedded into the glaze thereby coloring the glaze itself. In this case the background coating is preferably opaque and colored of uniform color, for example of white, beige or grey color. Such background coating may hide imperfections in the surface of the mineral board. The use of background coating of a color other than white may lead to a lowering of the needed ink lay-up for obtaining the desired colors in the printed decor and help increasing the color gamut of the decorative layer especially when the printed decor comprises inorganic pigment. The background coating can comprise a primer, i.e. a substance adapted to help fixing and/or application of the pigment of the printed decor.

According to a second possibility, the thermally curable substance is provided along a predetermined pattern, preferably substantially corresponding to the printed decor. In this case the thermally curable substance can be printed on the surface by means of printing techniques like for example offset printing, flexography, screen printing or digital printing. According to a preferred embodiment, the thermally curable substance is digitally printed, more preferably the thermally curable substance is comprised in the ink together with the pigment and the vehicle so that it is printed together with the pigment.

It is noted that the thermally curable substance can be provided in wet or dry form. In particular, the thermally curable substance can be provided in liquid or solid form, preferably in form of an extremely fine powder, for example adapted to be ejected by the nozzles of an inkjet printing head. For example, the thermally curable substance is in form of a powder having an average dimension below 0,8 µm, preferably below 0,7 µm, and a maximum dimension below 1,5 µm, preferably below 1 µm. The thermally curable substance can also be provided by means of an impregnated sheet, for example a paper sheet to be coupled on the top surface of the board.

It is also noted that the top decorative layer can comprise a further background coating and/or a further protective coating that are free form the thermally curable substance.

The top decorative layer can further comprise filler or additives adapted to improve the superficial properties of the floor element, like for example, impermeability, cleanability, wear and/or scratch resistance, antimicrobial behavior etc. For example, the top decorative layer can comprise wear resistant particles like Aluminum Oxide or Zirconium Oxide. Said filler or additives are preferably provided in the protective coating.

According to an embodiment of the invention, the floor element may comprise a back layer or balancing layer provided on a bottom surface of the mineral board, i.e. the surface opposite to the top surface provided with the top decorative layer, wherein the back layer is thermal cured. The bottom layer or balancing layer comprises a thermally curable substance that is preferably the same thermally curable substance of the top decorative layer, although it is not excluded that the thermally curable substance of the bottom layer or balancing layer may be a different thermally curable substance, for example a substance having lower aesthetic or superficial properties but that is cheaper than the substance of the top decorative layer.

The floor element can also comprise a moisture or vapor barrier layer and/or a noise reducing layer coupled to the bottom surface of the mineral board, for example coupled to the back or balancing layer.

It is noted that the top decorative layer of the floor element can comprise a relief structure. Preferably the relief structure has structural features corresponding to said printed decor. In other words, one or more relief features are positioned in a fixed relation to a feature of the printed decor. E.g. the relief feature may coincide with a printed feature, follow a printed feature or be positioned at a defined distance to a relief feature. The correspondence between certain relief features and the printed decor leads to a less artificial impression of the floor element itself.

The relief structure can comprise a plurality of protrusion or excavation present in the generally plane upper surface of the floor element. Preferably said relief structure extends substantially over the entire top decorative layer of the floor element.

It is noted that the floor element can comprise edges provided with coupling elements configured to realize a mechanical coupling with coupling elements of an adjacent floor element, thereby forming a floor covering. Under a "mechanical coupling", a coupling is to be understood that allows adjacent floor elements to be coupled without the need for glue or the like. A mechanical coupling may be attained by means of profiled edge contours comprising coupling elements, mostly a male and a female part, that fit into each other.

The coupling elements preferably comprise at least a male part and at least a female part, for example a tongue and a groove, wherein such male and female part in the connected state of two such floor elements have been engaged into each other.

The coupling elements are preferably configured to allow realizing a coupling by means of a movement of one floor element with respect to another adjacent floor element. Such movement may be a translational motion in a downward, e.g. vertical, direction, a translational motion in a horizontal direction, e.g. perpendicular to the edges or an angling motion around a horizontal axis parallel to the edges. It is clear that the respective motion then preferably results in the aforementioned male and female parts of adjacent floor elements becoming mutually engaged.

Hereabove has been described a floor element although it is clear that the invention may relate to a wall panel for forming a wall covering comprising substantially all the features of the floor element of the present invention.

The invention further relates to a method for manufacturing floor elements, which could also be used for manufacturing the floor elements of the present invention. Therefor the invention concerns a method for manufacturing a floor element comprising any of the features described herein above, more in detail, the invention provides for a method for manufacture a floor element comprising the steps of:
- providing a fiber containing mineral board or a board comprising mineral fibers;
- providing a top decorative layer on the mineral board by printing a decor;
- thermal curing the top decorative layer.

The thermal curing step is conducted a temperature below 900°C, for example 600°C or below 200°C, for example 150°C. Preferably the temperature is at least 100°C. According to a preferred aspect of the invention, the thermal curing step is a fast thermal curing step or superficial thermal curing step, namely a thermal curing step wherein the floor element is exposed to a thermal source in such a way that substantially only the surface, for example only the top decorative layer, is heated up to the curing temperature while the core of the mineral board is heated up to a temperature that is lower with respect to the curing temperature. Such superficial thermal curing step may be performed making use of a laser operation.

According to the invention the method further comprises the step of providing a thermally curable substance on the top decorative layer. The thermally curable substance can be provided at several locations or instances during the process of manufacturing the floor element. A non-exhaustive list of possibilities according to which the method of the invention can be put into practice are listed here below.

According to a first possibility, the thermally curable substance is provided in a step that is different with respect to the printing step, i.e. either before or after the printing step. In this case the thermally curable substance may be provided in order to coat uniformly at least partially or entirely the top surface of the floor element by means of any suitable coating technique, for example spry, roller or slipping, thereby providing the background coating or the protective coating as described above. Alternatively, the thermally curable substance may be provided along a predetermined pattern, preferably substantially corresponding to the printed decor. In this case the thermally curable substance can be printed on the surface by means of printing techniques like for example offset printing, flexography, screen printing or digital printing.

According to a second possibility, the thermally curable substance is provided during the printing step, i.e. together with the printed decor. In this case the thermally curable substance is mixed with the pigment to form an ink.

According to an embodiment of the invention the method comprises the step of providing a relief structure on the top decorative layer of the floor element, preferably by printing a curable substance along a predetermined pattern on the generally flat surface of the floor element and then by curing said curable substance to form the relief structure. According to a preferred embodiment said curable substance is the thermally curable substance so that the relief structure comprises, or is substantially formed by, the thermally cured substance. Anyway, it is not excluded that the curable substance is a different substance that is curable in any other way like for example UV, EB or IR radiation. Said relief structure may be provided according to different possibilities, a non-exhaustive list of which are listed here below.

According to a first possibility of providing the relief structure, the relief structure is provided on the floor element before the printing of the printed decor. Thus, the printed decor is subsequently printed on said relief structure.

According to a second possibility, the relief structure may be provided above the already existing printed decor. According to this second, the curable substance is preferably a transparent or translucent substance, for example a resin or a transparent glaze. According to a preferred embodiment of the invention, the curable substance forming the relief structure is the thermally curable substance so that with a unique thermal curing step it is possible to obtain the relief structure and the embedding of the printed decor inside the thermal cured substance. According to an alternative embodiment of the invention, the method provides for a first thermal curing step for embedding the printed decor into the thermally curable substance, and subsequently curable substance for forming the relief structure is provided on the already cured printed decor and then cured during a second curing step, wherein this second curing step may be either a heat, UV, EB or IR curing.

As stated, the method of the invention is preferably used for manufacturing the earlier described floor elements of the invention and that preferred embodiments of these floor elements aspect lead to corresponding preferred embodiments of the method of the invention.

With the intention of better showing the characteristics of the invention, in the following, as an example without any limitative character, several preferred forms of embodiments are described with reference to the accompanying drawings, wherein:
Figure 1 shows an embodiment of a floor element of the invention;
Figure 2 shows a perspective view of a floor covering formed by a plurality of floor elements according to Figure 1.
Figure 3 on a larger scale shows a cross section along the line III-III of Figure 1;
Figure 4 on a larger scale shows a view on the area F4 indicated on Figure 3;
Figure 5 on a larger scale shows a view on the area F4 indicated on Figure 3 according to a variant of the invention;
Figure 6 on a larger scale shows a view on the area F4 indicated on Figure 3 according to another variant of the invention;
Figure 7 on a larger scale shows a view on the area F4 indicated on Figure 3 according to a still another variant of the invention;
Figure 8 on a larger scale shows a view on the area F4 indicated on Figure 3 according to different embodiment.

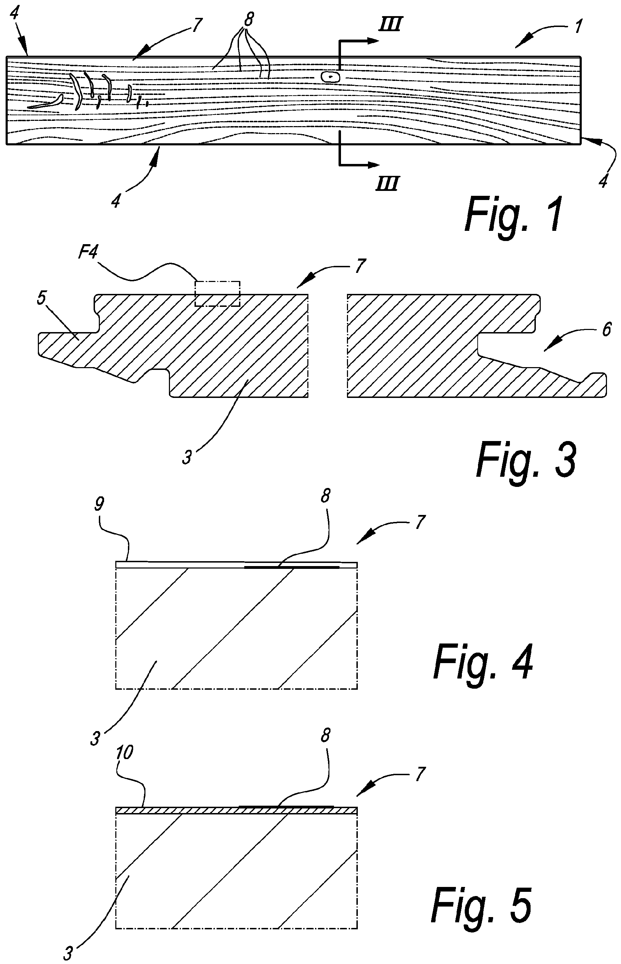

Figure 1 shows a floor element 1 adapted to be installed on a subsurface (not shown) and preferably configured to be coupled to one or more adjacent floor elements 1 for forming a floor covering 2.

The floor element 1 comprises a fiber containing mineral board 3. The mineral is preferably a cement, for example a Portland cement. Preferably the cement content is comprised between 25 and 85 % by volume, preferably between 35 and 50 % by volume.

The mineral board 3 also comprises fibers comprised in a content between 1 and 40 % by volume, preferably between 2 and 20 % by volume. Preferably the fibers content of the mineral board 3 is at least for 80 weight % made up of non-heat degradable fibers adapted to withstand temperature above 200°C preferably above 300°C. Therefore, the mineral board 3 preferably comprises glass fibers, carbon fibers, metal fibers like for example steel fibers and/or ceramic fibers like for example boron fibers. According to a preferred embodiment of the invention the mineral board 3 comprises glass fibers having a softening point above 800°C, more preferably above 900°C.

The mineral board comprises a thickness T comprised between 2 and 30 mm, preferably between 2 and 20 mm, more preferably between 3 and 15 mm.

In the example shown in the figures the mineral board has a rectangular and oblong shape.

According to the preferred embodiment, the floor element 1, more in detail the mineral board 3, comprises edges 4 provided with coupling elements 5, 6 configured to realize a mechanical coupling with coupling elements 5, 6 of an adjacent floor element 1, thereby forming the floor covering 2.

According to the preferred embodiment, the coupling elements 5, 6 preferably comprise at least a male part 5 and at least a female part 6, for example a tongue and a groove, wherein such male and female part 5, 6 in the connected state of two such floor elements 1 have been engaged into each other.

The floor element 1 further comprises a top decorative layer 7 having a printed decor 8. The printed decor 8 may be provided with a variety of textures, designs and colors preferably simulating a natural product, such as natural stone or wood. According to the preferred embodiment shown in figure 1, the printed decor 8 represents a wood pattern with grain lines running substantially in the longitudinal direction of the floor element 1.

The printed decor 8 may be applied with any printing technique, such as with rollers, serigraphy or with a digital printer, such as with an inkjet printer that is the preferred solution. According to a preferred embodiment the printed decor 8 comprises inorganic ceramic pigments printed on the top decorative layer 7 in form of an inkjet ceramic ink. Moreover, the printed decor 8 may be provided directly onto the top surface of the mineral board 3, that is the preferred solution, or by means of a printed paper laminated to the top surface of the mineral board 3.

The top decorative layer 7 further comprises a thermally curable substance adapted to harden when heated up to a curing temperature (so to become a thermally cured substance) to thereby cover or englobe the pigment so that the printed decor 8 is protected by the thermally cured substance. The thermally curable substance can be an organic substance or an inorganic substance, although an inorganic curable substance is preferred.

In case the thermally curable substance is an organic substance, it is preferably a thermosetting resin like for example a melamine resin, epoxy resin, polyurethane or acrylic resin. In this case the thermally curable substance can be heated at a temperature below 250°C, preferably below 150°C, for example 100°C.

In case the thermally curable substance is an inorganic substance, it is a glaze, i.e. a glassy and substantially impermeable coating. The glaze preferably has a softening point below 850°C, more preferably below 650°C, for example 600°C. The glaze comprises at least a frit that is a glass having a composition comprising one or more oxides the following elements: Si, B, P, Al, Mg, Li, Na, Ca, Sr, Sn, Pb, Fe. The glaze preferably has a hardness above 6 of the Mohs Scale, for example 7 of the Mohs scale so as to provide scratch and wear resistance to the top decorative layer of the floor element.

Figure 4, shows an embodiment of the invention wherein the thermally curable substance is provided in order to coat uniformly at least partially or entirely the top surface of the floor element 1 by means of any suitable coating technique, for example spry, roller or slipping. More in detail, in the embodiment of figure 4, the thermally cured substance is placed above the printed decor 8 thereby forming a protective coating 9 for the floor element 1. In this case the curable substance is preferably translucent or transparent. Preferably the protective coating 9 comprises filler or additives adapted to improve the superficial properties of the protective layer 9 itself, for example it comprises wear resistant particles like Aluminum Oxide or Zirconium Oxide.

Figure 5 shows an alternative embodiment wherein the thermally cured substance is coated onto the top surface of the floor element 1 beneath the printed decor 8 thereby forming a background coating 10. In this case the background coating 10 is preferably opaque and colored of uniform color, for example of white, beige or grey color. Said background coating 10 may hide imperfections in the surface of the mineral board 3.

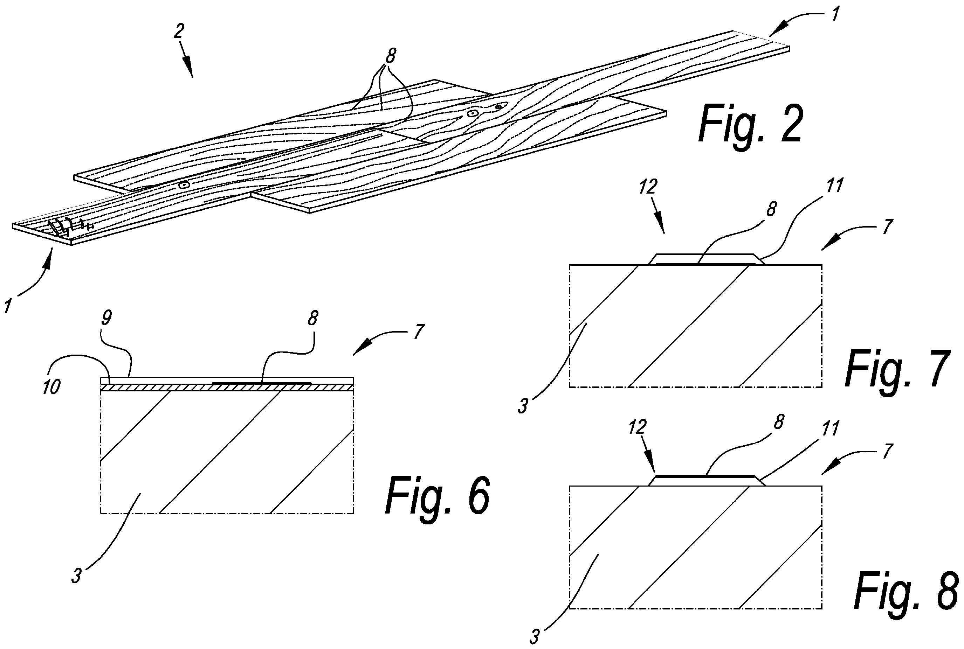

Figure 6 shows an embodiment wherein the floor element comprises both the protective coating 9 and the background coating 10.

Figures 7 and 8 shows an embodiment wherein the thermally curable substance is provided along a predetermined pattern 11, preferably substantially corresponding to the printed decor 8. In this case the pattern 11 of thermally curable substance can be printed on the top decorative layer by means of printing techniques like for example offset printing, flexography, screen printing or digital printing. According to a preferred embodiment, the pattern 11 of thermally curable substance is digitally printed, more preferably the thermally curable substance is comprised in the ink together with the pigment and the vehicle so that it is printed together with the pigment.

The top decorative layer 7 of the floor element 1 can comprise a relief structure 12. According to the preferred embodiments shown in figures 7 and 8, the relief structure 12 has structural features corresponding to the printed decor 8. In other words, one or more relief features are positioned in a fixed relation to a feature of the printed decor 8. E.g. the relief feature may coincide with a printed feature, follow a printed feature or be positioned at a defined distance to a relief feature. The correspondence between certain relief features and the printed decor 8 leads to a less artificial impression of the floor element 1 itself.

Figures from 7 and 8 shows a preferred embodiment wherein the relief structure 12 comprises a plurality of protrusions and is formed above the generally flat top surface of the mineral board 3 by printing a curable substance along a predetermined pattern, said curable substance may then be cured thereby forming the relief structure 12. In the preferred embodiments shown in figures 7 and 8 the curable substance used for forming the relief structure is the thermally curable substance for fixing the pigment to the top decorative layer 8 so that the relief structure 12 corresponds to the pattern 11 of the thermally cured substance.

In figure 7 is shown an embodiment wherein the relief structure 12 is formed before the printing step and wherein the printed decor 8 is provided above the relief structure.

Figure 8 shows an alternative embodiment wherein the relief structure 12 is formed after the printing step and wherein the printed decor 8 is provided beneath the relief structure 12.

The present invention is in no way limited to the hereinabove described embodiments, but such floor element may be realized according to different variants without leaving the scope of the present invention.

## Claims

1. A floor element (1) comprising a fiber containing mineral board (3) and a top decorative layer (7), wherein the top decorative layer (7) comprises a printed decor (8) and a thermally cured substance.

2. Floor element (1) according to claim, wherein the printed decor (8) is formed with ceramic pigments.

3. Floor element (1) according to claim 1, wherein the thermally cured substance is an organic substance.

4. Floor element (1) according to claim 1, wherein the thermally cured substance is an inorganic substance.

5. Floor element (1) according to claim 4, wherein the thermally cured substance is a glaze.

6. Floor element (1) according to claim 5, wherein the glaze comprises a frit having a softening point lower than 850°C.

7. Floor element (1) according to claim 6, wherein the glaze comprises a frit having a softening point lower than 600°C.

8. Floor element (1) according to any of the preceding claims, wherein the top decorative layer (7) comprises a background coating (10) beneath the printed decor (8).

9. Floor element (1) according to any of the preceding claims, wherein the top decorative layer (7) comprises a protective coating (9) above the printed decor (8).

10. Floor element (1) in accordance to any of the preceding claims, wherein the top decorative layer (7) comprises a relief structure (12).

11. Floor element (1) in accordance to claim 11, wherein the relief structure (12) comprises the thermally cured substance.

12. Floor element (1) in accordance with any of the claims from 5 to 7, wherein the top decorative layer (7) has a hardness above 6 of the Moss scale.

13. A floor covering (2) comprising a plurality of flooring elements (1) according to any of the preceding claims.

14. A method for manufacturing a floor element (1) comprising the step of:
- providing a fiber containing mineral board (3);
- providing the mineral board (3) with a top decorative layer (7) comprising a printed decor (8);
- thermal curing the top decorative layer (7).

15. Method according to claim 14, wherein the step of providing the top decorative layer (7) comprises the step of printing with a ceramic pigment.
